# EUROPEAN PATENT SPECIFICATION

(11) **EP 3 162 826 B1**
(45) Date of publication and mention of the grant of the patent: **02.01.2019**
(21) Application number: 15815949.1
(22) Date of filing: 25.06.2015
(51) Int. Cl.: C08F 299/06, C08G 18/67, C08K 5/07, C08K 5/33, C08K 5/53, C08L 75/04, C09D 5/02, C09D 175/14, C08G 18/75, C08G 18/08, C08G 18/12, C08G 18/32, C08G 18/42, C08G 18/44

(54) **ULTRAVIOLET CURABLE COMPOSITION**
UV-HÄRTBARE ZUSAMMENSETZUNG
COMPOSITION POUVANT DURCIR AUX ULTRAVIOLETS

(30) Priority: 30.06.2014 JP 2014134164
(43) Date of publication of application: 03.05.2017
(73) Proprietor: DIC Corporation, Tokyo 174-8520 (JP)
(72) Inventor: MIYAKE Junichi, Takaishi-shi Osaka 592-0001 (JP); SHIRAKAMI Jun, Takaishi-shi Osaka 592-0001 (JP)
(74) Representative: Adam, Holger
(86) International application number: PCT/JP2015/068312
(87) International publication number: WO 2016/002615

(56) References cited:
- WO-A1-2012/171833
- WO-A1-2014/156423
- JP-A- H1 135 640
- JP-A- S57 165 422
- JP-A- 2001 200 025
- JP-A- 2005 510 617
- JP-A- 2011 026 369

## Description

### Technical Field

The present invention relates to an ultraviolet curable composition which can be used in various applications, for example, a coating agent and an adhesive.

### Background Art

An ultraviolet curable composition generally has excellent adhesion to a substrate and can form a flexible coating film, and therefore has been used in various applications including a coating agent and an adhesive.

With respect to the ultraviolet curable composition, for example, known is an aqueous polyurethane dispersion obtained by causing a mixture containing a) at least one organic aliphatic, alicyclic, or aromatic di-, tri-, or polyisocyanate, b) at least one isocyanate reactive polycarbonate diol, triol, or polyol, c) at least one compound having at least one isocyanate reactive group and at least one free radically polymerizable unsaturated group, and d) at least one compound having at least one isocyanate reactive group and at least one dispersion active group, and optionally e) at least one compound having at least two isocyanate reactive groups and having a molecular weight of less than 1,000 g/mol, preferably less than 500 g/mol to react, and dispersing the resultant reaction product in water (see, for example, PTL 1).

Studies are being made on the use of the ultraviolet curable composition for, for example, a surface coating for optical members such as a flexible display. However, a coating film formed by using the above-mentioned aqueous polyurethane dispersion is not satisfactory in flexibility, such as elongation and flexing properties, and hence is likely to cause the resultant article having thereon the coating film to suffer whitening or the like when it is flexed. Further, the coating film formed by using the aqueous polyurethane dispersion is not satisfactory in hardness. Therefore, for example, when the aqueous polyurethane dispersion is used as a surface coating agent for a touch panel or the like, the resultant coating film is likely to be damaged, thereby causing the touch panel or the like to be poor in appearance or the like.

### Citation List

### Patent Literature

PTL 1: JP-T-2008-534710

### Summary of Invention

### Technical Problem

An object to be achieved by the present invention is to provide an ultraviolet curable composition which is satisfactorily cured even when an LED lamp is used as a light source, and which can form a cured coating film having both excellent elongation and excellent surface hardness.

### Solution to Problem

The present inventors have conducted extensive and intensive studies with a view toward solving the above-mentioned problems. As a result, it has been found that the problems can be solved by using, as a polyol which is a raw material for an urethane resin, an alkylene diol (a1-1) having 1 to 5 carbon atoms and having two or more specific polymerizable unsaturated groups, and using a photopolymerization initiator (C) having an absorption peak at a wavelength in the range of from 320 to 460 nm, thereby completing the present invention.

Specifically, the present invention is directed to an ultraviolet curable composition which contains: (A) an urethane resin having a polymerizable unsaturated group, which is obtained by reacting a polyol (a1) and a polyisocyanate (a2) with each other, wherein the polyol (a1) contains an alkylene diol (a1-1) having two or more polymerizable unsaturated groups, which is represented by the general formula (1) below or an oxyalkylene diol (a1-2) having two or more polymerizable unsaturated groups, which is represented by the general formula (2) below; (B) an aqueous medium; and (C) a photopolymerization initiator having an absorption peak at a wavelength in the range of from 320 to 460 nm.
[Chem. 1]

**HO-R¹-OH** **(1)**

In the general formula (1), R¹ represents a structure having two or more atomic groups having a polymerizable unsaturated group in the side chain of a linear alkylene group having 1 to 9 carbon atoms.
[Chem. 2]

**HO-R¹O-R²-OR³-OH** **(2)**

In the general formula (2), R¹ and R³ individually represent a structure having an atomic group having a polymerizable unsaturated group in the side chain of an ethylene group, and R² represents an alkylene group having 1 to 5 carbon atoms.

### Advantageous Effects of Invention

The ultraviolet curable composition of the present invention can form a coating film having both excellent elongation and excellent surface hardness, and therefore can be advantageously used as a coating agent and an adhesive for plastic substrates of, for example, an acrylonitrile-butadiene-styrene resin (ABS resin), a polycarbonate resin (PC resin), an ABS/PC resin, a polystyrene resin (PS resin), a polymethacrylic acid resin (PMMA resin), and a polyester resin (PET resin).

### Description of Embodiments

The ultraviolet curable composition of the present invention contains: (A) an urethane resin having a polymerizable unsaturated group, which is obtained by reacting a polyol (a1) and a polyisocyanate (a2) with each other, wherein the polyol (a1) contains an alkylene diol (a1-1) having two or more polymerizable unsaturated groups, which is represented by the general formula (1) below, or an oxyalkylene diol (a1-2) having two or more polymerizable unsaturated groups, which is represented by the general formula (2) below; (B) an aqueous medium; and (C) a photopolymerization initiator having an absorption peak at a wavelength in the range of from 320 to 460 nm.

With respect to the urethane resin (A), there is used an urethane resin having a polymerizable unsaturated group, which is obtained by reacting a polyol (a1) and a polyisocyanate (a2) with each other, wherein the polyol (a1) contains an alkylene diol (al-1) having two or more polymerizable unsaturated groups, which is represented by the following general formula (1), or an oxyalkylene diol (a1-2) having two or more polymerizable unsaturated groups, which is represented by the following general formula (2).
[Chem. 3]

**HO-R¹-OH** **(1)**

In the general formula (1), R¹ represents a structure having two or more atomic groups having a polymerizable unsaturated group in the side chain of a linear alkylene group having 1 to 9 carbon atoms.
[Chem. 4]

**HO-R¹O-R²-OR³-OH** **(2)**

In the general formula (2), R¹ and R³ individually represent a structure having an atomic group having a polymerizable unsaturated group in the side chain of an ethylene group, and R² represents an alkylene group having 1 to 5 carbon atoms.

With respect to the polyol (a1) used in producing the urethane resin (A), for the purpose of introducing two or more polymerizable unsaturated groups into the side chain of the urethane resin (A) for the principal chain of the urethane resin (A) in which an urethane bond is mainly present, the polyol (a1) containing the alkylene diol (a1-1) having two or more polymerizable unsaturated groups, which is represented by the general formula (1), or the oxyalkylene diol (a1-2) having two or more polymerizable unsaturated groups, which is represented by the general formula (2), is used. The polymerizable unsaturated groups derived from the alkylene diol (a1-1) and the oxyalkylene diol (a1-2) undergo radical polymerization when a coating film or the like is formed. Thus, a coating film having both excellent elongation and excellent surface hardness can be formed.

With respect to the alkylene diol (a1-1), one having a structure represented by the general formula (1) can be used. In the general formula (1), R¹ represents a structure having two or more atomic groups having a polymerizable unsaturated group in the side chain of a linear alkylene group having 1 to 9 carbon atoms. For example, pentaerythritol di(meth)acrylate corresponds to the general formula (1) wherein R¹ represents a structure having two atomic groups having a polymerizable unsaturated group in the side chain of a propylene group having 3 carbon atoms.

The alkylene diol (a1-1) having 2 to 5 polymerizable unsaturated groups is preferably used, and the alkylene diol (a1-1) having 2 to 3 polymerizable unsaturated groups is more preferably used for obtaining an ultraviolet curable composition capable of forming a coating film having both excellent elongation and excellent surface hardness.

Examples of the alkylene diols (a1-1) include pentaerythritol di(meth)acrylate [dimethylolpropane di(meth)acrylate], dimethylolmethane di(meth)acrylate (in the general formula (1), R¹ represents 2 atomic groups having 3 carbon atoms and having a polymerizable unsaturated group), diethylolmethane di(meth)acrylate, diethylolpropane di(meth)acrylate (in the general formula (1), R¹ represents 2 atomic groups having 5 carbon atoms and having a polymerizable unsaturated group), dipropanolmethane di(meth)acrylate, dipropanolpropane di(meth)acrylate (in the general formula (1), R¹ represents 2 atomic groups having 7 carbon atoms and having a polymerizable unsaturated group), dibutanolmethane di(meth)acrylate, and dibutanolpropane di(meth)acrylate (in the general formula (1), R¹ represents 2 atomic groups having 9 carbon atoms and having a polymerizable unsaturated group). Of these, pentaerythritol di(meth)acrylate and dimethylolmethane di(meth)acrylate are preferably used for obtaining an ultraviolet curable composition capable of forming a coating film having both excellent elongation and excellent surface hardness. These alkylene diols (a1-1) can be used individually or in combination.

With respect to the oxyalkylene diol (a1-2), one having a structure represented by the general formula (2) can be used. In the general formula (2), R¹ and R³ individually represent a structure having an atomic group having a polymerizable unsaturated group in the side chain of an ethylene group. The number of the structures having an atomic group having a polymerizable unsaturated group in the side chain of an ethylene group in the general formula (2) is 2 or more in total, preferably in the range of from 2 to 5, more preferably in the range of from 2 to 3.

Further, in the general formula (2), R² represents an alkylene group having 1 to 5 carbon atoms, and examples include a methylene group, an ethylene group, a propylene group, a butylene group, and a pentyl group.

Examples of the oxyalkylene diols (a1-2) include bis(3-acryloyloxy-2-hydroxypropoxy)methane (in the general formula (2), R¹ has 2 carbon atoms, R² has 1 carbon atom, and R³ represents 2 atomic groups having 2 carbon atoms and having a polymerizable unsaturated group), 1,2-bis(3-acryloyloxy-2-hydroxypropoxy)ethane (in the general formula (2), R¹ has 2 carbon atoms, R² has 2 carbon atoms, and R³ represents 2 atomic groups having 2 carbon atoms and having a polymerizable unsaturated group), 1,3-bis(3-acryloyloxy-2-hydroxypropoxy)propane (in the general formula (2), R¹ has 2 carbon atoms, R² has 3 carbon atoms, and R³ represents 2 atomic groups having 2 carbon atoms and having a polymerizable unsaturated group), 1,4-bis(3-acryloyloxy-2-hydroxypropoxy)butane (in the general formula (2), R¹ has 2 carbon atoms, R² has 4 carbon atoms, and R³ represents 2 atomic groups having 2 carbon atoms and having a polymerizable unsaturated group), and 1,5-bis(3-acryloyloxy-2-hydroxypropoxy)pentane (in the general formula (2), R¹ has 2 carbon atoms, R² has 5 carbon atoms, and R³ represents 2 atomic groups having 2 carbon atoms and having a polymerizable unsaturated group). Of these, bis(3-acryloyloxy-2-hydroxypropoxy)methane is preferably used for obtaining an ultraviolet curable composition capable of forming a coating film having both excellent elongation and excellent surface hardness. These oxyalkylene diols (a1-2) can be used individually or in combination.

For obtaining an ultraviolet curable composition capable of forming a coating film having both excellent elongation and excellent surface hardness, the total amount of the alkylene diol (a1-1) and the oxyalkylene diol (al-2) used is preferably in the range of from 0.1 to 49% by mass, more preferably in the range of from 1 to 15% by mass, based on the total mass of the raw materials used in producing the urethane resin (A). The total mass of the raw materials used in producing the urethane resin (A) indicates the total mass of the polyol (a1), the polyisocyanate (a2), and a chain extender optionally used.

With respect to the polyol (a1) usable in producing the urethane resin (A), the alkylene diol (a1-1) and the oxyalkylene diol (a1-2) and, if necessary, the other polyol can be used in combination.

As examples of the other polyols, there can be mentioned polyols having a hydrophilic group used for the purpose of imparting excellent dispersion stability in water to the urethane resin (A).

Examples of the polyols having a hydrophilic group include polyols having an anionic group, polyols having a cationic group, and polyols having a nonionic group. Of these, polyols having an anionic group are preferred.

Examples of the polyols having an anionic group include polyols having a carboxyl group and polyols having a sulfonic acid group.

Examples of the polyols having a carboxyl group include 2,2-dimethylolpropionic acid, 2,2-dimethylolbutanoic acid, and 2,2-dimethylolvaleric acid, and, of these, 2,2-dimethylolpropionic acid is preferred. There can also be used a polyester polyol having a carboxyl group obtained by reacting the above-mentioned polyol having a carboxyl group and a polycarboxylic acid with each other.

Examples of the polyols having a sulfonic acid group include dicarboxylic acids, such as 5-sulfoisophthalic acid, sulfoterephthalic acid, 4-sulfophthalic acid, and 5[4-sulfophenoxy]isophthalic acid, and salts thereof; a polyester polyol obtained by reacting the above dicarboxylic acid and a low molecular-weight polyol, such as ethylene glycol, propylene glycol, 1,4-butanediol, 1,6-hexanediol, diethylene glycol, or neopentyl glycol; and a polyester polyol obtained by reacting the above-mentioned polyester polyol and a cyclic ester compound, such as γ-butyrolactone, δ-valerolactone, or ε-caprolactone.

Part of or all of the anionic groups of the polyol are preferably neutralized with a basic compound or the like for exhibiting excellent dispersibility in water.

Examples of basic compounds usable in neutralizing the anionic group of the polyol include organic amines having a boiling point of 200°C or higher, such as ammonia, triethylamine, morpholine, monoethanolamine, and diethylethanolamine; and metal hydroxides, such as sodium hydroxide, potassium hydroxide, and lithium hydroxide. From the viewpoint of obtaining the ultraviolet curable composition having improved dispersion stability in water, the basic compound is preferably used in such an amount that the [basic compound/(total of the acid groups including a carboxyl group)] ratio becomes 0.5 to 3 (molar ratio), more preferably 0.7 to 1.5 (molar ratio).

Examples of the polyols having a cationic group include polyols having a tertiary amino group. Specifically, there can be mentioned N-methyldiethanolamine, and a polyol obtained by reacting a compound having two epoxy groups with a secondary amine.

Part of or all of the cationic groups of the polyol are preferably neutralized with an acidic compound, such as formic acid, acetic acid, propionic acid, succinic acid, glutaric acid, tartaric acid, adipic acid, or phosphoric acid.

Part of or all of the tertiary amino groups as the cationic group of the polyol are preferably subjected to quaternization. Examples of the quaternization agents include dimethylsulfuric acid, diethylsulfuric acid, methyl chloride, and ethyl chloride, and preferred is dimethylsulfuric acid.

Examples of the polyols having a nonionic group include polyalkylene glycols having a structure unit derived from ethylene oxide.

The polyol having a hydrophilic group is preferably used in an amount in the range of from 1 to 20% by mass, based on the total mass of the raw materials used in producing the urethane resin (A), and, for obtaining an ultraviolet curable composition capable of forming a coating film having both further excellent elongation and further excellent surface hardness, the polyol is preferably used in an amount in the range of from 1 to 10% by mass.

Examples of the other polyols for forming a coating film having both further more excellent elongation and further more excellent surface hardness include polyester polyol, polycarbonate polyol, and polyether polyol. Of these, polyester polyol and polycarbonate polyol are preferred.

Examples of the polyester polyols include a polyester polyol obtained by reacting a low molecular-weight polyol and a polycarboxylic acid with each other; a polyester polyol obtained by subjecting a cyclic ester compound, such as ε-caprolactone, to a ring-opening polymerization reaction; and a polyester polyol obtained by copolymerizing these compounds.

Examples of the low molecular-weight polyols include aliphatic polyols having a molecular weight of about 50 to 300, such as ethylene glycol, propylene glycol, 1,4-butanediol, 1,6-hexanediol, diethylene glycol, neopentyl glycol, and 1,3-butanediol; polyols having an alicyclic structure, such as cyclohexanedimethanol; and polyols having an aromatic structure, such as bisphenol A and bisphenol F. Of these, 1,6-hexanediol and neopentyl glycol are preferred.

Examples of the polycarboxylic acids usable in producing the polyester polyol include aliphatic polycarboxylic acids, such as succinic acid, adipic acid, sebacic acid, and dodecanedicarboxylic acid; aromatic polycarboxylic acids, such as terephthalic acid, isophthalic acid, phthalic acid, and naphthalenedicarboxylic acid; and anhydrides and esterification products thereof.

Examples of the polycarbonate polyols include polycarbonate polyols obtained by reacting a diol, such as 1,4-butanediol, 1,5-pentanediol, 1,6-hexanediol, or cyclohexanedimethanol, and a carbonate, such as dimethyl carbonate or diethyl carbonate, and phosgene and the like.

The polyester polyol, polyether polyol, or polycarbonate polyol is preferably used in an amount in the range of from 1 to 70% by mass, based on the total mass of the raw materials used in producing the urethane resin (A), more preferably used in an amount in the range of from 15 to 45% by mass for forming a coating film having both further more excellent elongation and further more excellent surface hardness.

Examples of the polyisocyanates (a2) used in producing the urethane resin (A) include polyisocyanates having an alicyclic structure, such as cyclohexane diisocyanate, dicyclohexylmethane diisocyanate, and isophorone diisocyanate; aromatic polyisocyanates, such as 4,4'-diphenylmethane diisocyanate, 2,4'-diphenylmethane diisocyanate, carbodiimide-modified diphenylmethane diisocyanate, crude diphenylmethane diisocyanate, phenylene diisocyanate, tolylene diisocyanate, and naphthalene diisocyanate; and aliphatic polyisocyanates, such as hexamethylene diisocyanate, lysine diisocyanate, xylylene diisocyanate, and tetramethylxylylene diisocyanate. Of these, as the polyisocyanate (a2), dicyclohexylmethane diisocyanate or isophorone diisocyanate is preferred for forming a coating film having both excellent elongation and excellent surface hardness. These polyisocyanates (a2) can be used individually or in combination.

As an example of a method for producing the urethane resin (A) by reacting the polyol (a1) and the polyisocyanate (a2) with each other, there can be mentioned a method in which the polyol (a1) and the polyisocyanate (a2) are mixed with each other, for example, without a solvent or in the presence of an organic solvent and subjected to reaction at a reaction temperature in the range of from about 50 to 150°C.

The reaction of the polyol (a1) and the polyisocyanate (a2) is preferably conducted so that, for example, the equivalent ratio of the isocyanate group of the polyisocyanate (a2) to the hydroxyl group of the polyol (a1) becomes in the range of from 0.8 to 2.5, more preferably in the range of from 0.9 to 1.5.

When producing the urethane resin (A), in addition to the polyol (a1) and the polyisocyanate (a2), if necessary, a chain extender can be used for forming a coating film having both further more excellent elongation and further more excellent surface hardness.

With respect to the chain extender usable in producing the urethane resin (A), a polyamine, a hydrazine compound, the other active hydrogen atom-containing compound, or the like can be used.

Examples of the polyamines include diamines, such as ethylenediamine, 1,2-propanediamine, 1,6-hexamethylenediamine, piperazine, 2,5-dimethylpiperazine, isophoronediamine, 4,4'-dicyclohexylmethanediamine, 3,3'-dimethyl-4,4'-dicyclohexylmethanediamine, and 1,4-cyclohexanediamine; N-hydroxymethylaminoethylamine, N-hydroxyethylaminoethylamine, N-hydroxypropylaminopropylamine, N-ethylaminoethylamine, and N-methylaminopropylamine; and diethylenetriamine, dipropylenetriamine, and triethylenetetramine. These polyamines can be used individually or in combination.

Examples of the hydrazine compounds include hydrazine, N,N'-dimethylhydrazine, and 1,6-hexamethylenebishydrazine; succinic dihydrazide, adipic dihydrazide, glutaric dihydrazide, sebacic dihydrazide, and isophthalic dihydrazide; and β-semicarbazide propionic hydrazide. These hydrazine compounds can be used individually or in combination.

Examples of the other active hydrogen-containing compounds include glycols, such as ethylene glycol, diethylene glycol, triethylene glycol, propylene glycol, 1,3-propanediol, 1,3-butanediol, 1,4-butanediol, hexamethylene glycol, saccharose, methylene glycol, glycerol, and sorbitol; phenols, such as bisphenol A, 4,4'-dihydroxydiphenyl, 4,4'-dihydroxydiphenyl ether, 4,4'-dihydroxydiphenyl sulfone, hydrogenated bisphenol A, and hydroquinone; and water, and these can be used individually or in combination in such an amount or amounts that the storage stability of the ultraviolet curable composition of the present invention is not lowered.

Examples of organic solvents usable in producing the urethane resin (A) include ketone solvents, such as acetone and methyl ethyl ketone; ether solvents, such as tetrahydrofuran and dioxane; acetate solvents, such as ethyl acetate and butyl acetate; nitrile solvents, such as acetonitrile; and amide solvents, such as dimethylformamide and N-methylpyrrolidone. These organic solvents can be used individually or in combination.

With respect to the organic solvent, in view of the safety and reduction of the load on the environment, during or after the production of the urethane resin (A), part of or all of the organic solvent may be removed by, for example, distilling off under reduced pressure.

With respect to the urethane resin (A) obtained by the above-mentioned method, for forming a coating film having both further more excellent elongation and further more excellent surface hardness, the urethane resin (A) having a weight average molecular weight in the range of from 10,000 to 500,000 is preferably used, the urethane resin (A) having a weight average molecular weight in the range of from 20,000 to 200,000 is more preferably used, and the urethane resin (A) having a weight average molecular weight in the range of from 40,000 to 100,000 is further preferably used.

With respect to the urethane resin (A), for forming a coating film having both further more excellent elongation and further more excellent surface hardness, the urethane resin (A) having an urea bond is preferably used.

The urethane resin (A) having an urea bond equivalent in the range of from 500 to 50,000 is preferably used for forming a coating film having both further more excellent elongation and further more excellent surface hardness.

As an example of a method for producing the ultraviolet curable composition of the present invention by dissolving or dispersing the urethane resin (A) obtained by the above-mentioned method in the aqueous medium (B), there can be mentioned a method in which, for example, when the urethane resin (A) has a hydrophilic group, part of or all of the hydrophilic groups of the urethane resin (A) are neutralized, and then the neutralized material and the aqueous medium (B) are mixed with each other to produce the ultraviolet curable composition.

Examples of the aqueous media (B) include water, organic solvents miscible with water, and mixtures thereof. Examples of organic solvents miscible with water include alcohols, such as methanol, ethanol, n-propanol, and isopropanol; ketones, such as acetone and methyl ethyl ketone; polyalkylene glycols, such as ethylene glycol, diethylene glycol, and propylene glycol; alkyl ethers, such as polyalkylene glycol; and lactams, such as N-methyl-2-pyrrolidone. In the present invention, water may be solely used, a mixture of water and an organic solvent miscible with water may be used, and an organic solvent miscible with water may be solely used. From the viewpoint of the safety and load on the environment, it is preferred to use water solely or a mixture of water and an organic solvent miscible with water, and it is especially preferred to use water solely.

The ultraviolet curable composition of the present invention obtained by the above-mentioned method preferably contains the urethane resin (A) in an amount in the range of from 5 to 85% by mass, preferably in the range of from 15 to 50% by mass, based on the mass of the ultraviolet curable composition. Further, the ultraviolet curable composition of the present invention obtained by the above-mentioned method preferably contains the aqueous medium (B) in an amount in the range of from 10 to 90% by mass, preferably in the range of from 45 to 80% by mass, based on the mass of the ultraviolet curable composition.

Further, the ultraviolet curable composition of the present invention uses a photopolymerization initiator (C) for causing the polymerizable unsaturated group of the urethane resin (A) to undergo radical polymerization.

With respect to the photopolymerization initiator (C), a photopolymerization initiator having an absorption peak at a wavelength in the range of from 320 to 460 nm is used. Further, an LED lamp has an emission of light with such a wavelength generally in the range of from 350 to 400 nm that the curing properties using the LED lamp are further improved and the cured coating film can be further prevented from yellowing, and therefore a photopolymerization initiator having an absorption peak at a wavelength in the range of from 350 to 400 nm is more preferably used.

Examples of the photopolymerization initiators (C) include 2-(dimethylamino)-1-(4-morpholinophenyl)-2-benzyl-1-butanone (around 320 nm), 2-(dimethylamino)-2-[(4-methylphenyl)methyl]-1-[4-(4-morpholinyl)phenyl]-1-butanone (around 330 nm), 2,4,6-trimethylbenzoyl-diphenyl-phosphine oxide (around 380 nm), bis(2,4,6-trimethylbenzoyl)phenylphosphine oxide (around 370 nm), titanium bis(η5-2,4-cyclopentadien-1-yl)-bis(2,6-difluoro-3-(1H-pyrrol-1-yl)-phenyl) (360 to 460 nm), 1,2-octanedione,1-[4-(phenylthio)-2-(O-benzoyloxime)] (around 240, 330 nm), and O-acetyl-1-[6-(2-methylbenzoyl)-9-ethyl-9H-carbazol-3-yl]ethanoneoxime (around 260, 295, 340 nm). These photopolymerization initiators (C) can be used individually or in combination. The figures in parentheses shown after the names of the compounds indicate absorption peaks.

The photopolymerization initiator (C) is preferably used in an amount in the range of from 0.1 to 10 parts by mass, preferably 0.5 to 6 parts by mass, most preferably 1 to 4 parts by mass, relative to 100 parts by mass of the urethane resin (A), in terms of a solids content.

The photopolymerization initiator (C) may be added either before dispersing the urethane resin (A) in the aqueous medium (B) or after dispersing the urethane resin (A) in the aqueous medium (B).

A general LED lamp has a wavelength of 365 nm or more, and therefore only the photopolymerization initiator (C) is preferably used. However, when the composition is cured using a short wavelength LED lamp (wavelength: 360 nm or less), in addition to the photopolymerization initiator (C), if necessary, an additional photopolymerization initiator, for example, an alkylphenone photopolymerization initiator (1-hydroxycyclohexyl phenyl ketone, 2-hydroxy-2-methyl-1-phenyl-propan-1-one, 1-[4-(2-hydroxyethoxy)-phenyl]-2-hydroxy-2-methyl-1-propan-1-one, or methyl phenylglyoxylate) or an α-aminoalkylphenone photopolymerization initiator (2-methyl-1-(4-methylthiophenyl)-2-morpholinopropan-1-one) may be further used.

The photopolymerization initiator (C) in the form of a solution obtained by dissolving it in a film-forming auxiliary may be incorporated into the ultraviolet curable composition of the present invention.

Examples of the film-forming auxiliaries include N-methyl-2-pyrrolidone, dipropylene glycol dimethyl ether, diacetone alcohol, and ethylene glycol monobutyl ether.

The ultraviolet curable composition may contain an additive if necessary, and examples of the additives include a compound having a polymerizable unsaturated group, a film-forming auxiliary, a filler, a thixotropic agent, a tackifier, a pigment, and an anti-microbial agent, and the additive can be used in such an amount that the object of the present invention can be achieved.

Examples of the compounds having a polymerizable unsaturated group include dipentaerythritol hexa(meth)acrylate. By using such a compound, an ultraviolet curable composition capable of forming a coating film having even higher hardness can be obtained.

Examples of the film-forming auxiliaries include anionic surfactants (such as dioctylsulfosuccinate sodium salt), hydrophobic nonionic surfactants (such as sorbitan monooleate), and silicone oil.

Examples of the thixotropic agents include the filler having a surface treated with a fatty acid, a fatty acid metal salt, a fatty acid ester, a paraffin, a resin acid, a surfactant, or polyacrylic acid, polyvinyl chloride powder, hydrogenated castor oil, finely powdered silica, organic bentonite, and sepiolite.

With respect to the pigment, an inorganic pigment or organic pigment known and commonly used can be used.

Examples of the inorganic pigments include titanium oxide, antimony red, red ion oxide, cadmium red, cadmium yellow, cobalt blue, Prussian blue, ultramarine blue, carbon black, and graphite.

Examples of the organic pigments include organic pigments, such as a quinacridone pigment, a quinacridonequinone pigment, a dioxazine pigment, a phthalocyanine pigment, an anthrapyrimidine pigment, an anthanthrone pigment, an indanthrone pigment, a flavanthrone pigment, a perylene pigment, a diketopyrrolopyrrole pigment, a perinone pigment, a quinophthalone pigment, an anthraquinone pigment, a thioindigo pigment, a benzimidazolone pigment, and an azo pigment. These pigments can be used individually or in combination. Further, these pigments may have a surface treated so as to have self-dispersibility in an aqueous medium.

Examples of the anti-microbial agents include silver chloride, tolyfluanid, dichlorofluanid, fluor folpet, zinc pyrithione, methyl 2-benzimidazolecarbamate, and 2-(4-thiazolyl)benzimidazole.

Examples of other additives include various additives, such as reaction accelerators (e.g., a metal reaction accelerator, a metal salt reaction accelerator, and an amine reaction accelerator), stabilizers (e.g., an ultraviolet light absorber, an antioxidant, and a heat stabilizer), moisture removing agents (e.g., 4-paratoluenesulfonyl isocyanate), adsorbents (e.g., quick lime, slaked lime, zeolite, and molecular sieves), a tackifier, an anti-foaming agent, and a leveling agent.

The ultraviolet curable composition of the present invention can be advantageously used in a coating agent capable of imparting, for example, surface protection or design performance to various substrates.

Examples of substrates onto which the coating agent can be applied to form a coating film include a glass substrate, a metal substrate, a plastic substrate, paper, a wood substrate, and a fibrous substrate. Further, a substrate of a porous structure, such as an urethane foam, can also be used.

As a plastic substrate, for example, a polycarbonate substrate, a polyester substrate, an acrylonitrile-butadiene-styrene substrate, a polyacryl substrate, a polystyrene substrate, a polyurethane substrate, an epoxy resin substrate, a polyvinyl chloride substrate, or a polyamide substrate can be used.

Examples of the metal substrates include plated steel plates, such as a zinc-plated steel plate and an aluminum-zinc alloy steel plate, an iron plate, an aluminum plate, an aluminum alloy plate, a flat rolled magnetic steel plate, a copper plate, and a stainless steel plate.

The substrate may be one which is formed from the above-mentioned material and which has a plane form or a bent portion, or may be a substrate formed from fiber, such as nonwoven fabric.

A coating film can be formed by, for example, applying the ultraviolet curable composition of the present invention directly to the surface of the substrate or to the surface of the substrate having a primer layer or the like preliminarily formed thereon, and then drying the applied composition, and then causing the polymerizable unsaturated double bond group of the urethane resin (A) to undergo radical polymerization.

Further, a coating film formed using the ultraviolet curable composition can be stacked on the surface of a desired substrate by applying the ultraviolet curable composition onto release paper, and then drying and curing the applied composition to form a coating film on the surface of the release paper, and further applying an adhesive or a pressure-sensitive adhesive onto the formed coating film, and putting the resultant coating film on a substrate formed from fiber, such as nonwoven fabric, and removing the release paper from the coating film.

Examples of methods for applying the ultraviolet curable composition onto the substrate include a spraying method, a curtain coater method, a flow coater method, a roll coater method, a brushing method, and a dipping method.

Further, the ultraviolet curable composition is applied to a substrate or the like, and then irradiated with an ultraviolet light to form a cured coating film. As an example of a method for irradiating the applied composition with the ultraviolet light, there can be mentioned a method using a known lamp, such as a xenon lamp, a xenon-mercury lamp, a metal halide lamp, a highpressure mercury lamp, a low-pressure mercury lamp, or an LED lamp. Of these, an LED lamp is preferred.

As an example of the LED lamp, there can mentioned an apparatus which emits an ultraviolet light having a single peak in the range of from 350 to 400 nm, and which has an energy intensity of about 100 to 3,000 mW/cm² in terms of an ultraviolet light intensity.

The irradiation dose of the active energy ray is preferably in the range of from 0.05 to 5 J/cm², more preferably in the range of from 0.1 to 3 J/cm², especially preferably in the range of from 0.1 to 1 J/cm². The above-mentioned irradiation dose of an ultraviolet light is based on a value measured using UV Checker UVR-N1 (manufactured by Japan Storage Battery Co., Ltd.) in a wavelength region of from 300 to 390 nm.

The thickness of the coating film which can be formed using the ultraviolet curable composition of the present invention can be appropriately controlled according to the use of the substrate or the like. However, generally, the thickness of the coating film is preferably about 0.1 to 100 µm.

The article having a coating film formed on the substrate using the coating agent as mentioned above can be used as optical members for a liquid crystal display, a flexible display, and the like, various plastic products for cell phones and household appliances, and metal products, such as exterior automotive trims and building materials.

### Examples

Hereinbelow, the present invention will be described in more detail with reference to the following Examples and Comparative Examples.

### (Synthesis Example 1: Synthesis of aqueous urethane resin composition (1))

Into a 2-liter four-necked flask equipped with a heating apparatus, a stirrer, a thermometer, and a reflux condenser, 49.9 parts by mass of methyl ethyl ketone, 50 parts by mass of polycarbonate polyol (polycarbonate polyol obtained by reacting 1,6-hexanediol, 1,5-pentanediol, and diethyl carbonate; number average molecular weight: 2,000), 6.8 parts by mass of 2,2-dimethylolpropionic acid, 6.6 parts by mass of 1,6-hexanediol, 11.2 parts by mass of pentaerythritol diacrylate (in the general formula (1), R¹ represents 2 atomic groups having 3 carbon atoms and having a polymerizable unsaturated group), 0.0022 part by mass of methylhydroquinone, and 0.022 part by mass of 2,6-tert-butyl-p-cresol were charged, and the temperature of the resultant mixture was adjusted to 50°C while stirring.

Then, 53.9 parts by mass of dicyclohexylmethane diisocyanate was fed into the four-necked flask, and the resultant mixture was subjected to reaction at 80°C for about 5 hours, and then 35.7 parts by mass of methyl ethyl ketone was fed to the resultant reaction mixture, followed by cooling to 50°C. After cooling, 6.4 parts by mass of dipentaerythritol hexaacrylate and 5.1 parts by mass of triethylamine were fed to the mixture, and 318.1 parts by mass of ion-exchanged water was added dropwise to the resultant mixture.

Then, 16 parts by mass of a 10% by mass aqueous piperazine solution as a chain extender was fed into the four-necked flask and the resultant mixture was subjected to reaction, and then subjected to desolvation under reduced pressure to obtain an aqueous urethane resin composition (1) having a nonvolatile content of 33% by mass.

### (Synthesis Example 2: Synthesis of aqueous urethane resin composition (2))

Into a 2-liter four-necked flask equipped with a heating apparatus, a stirrer, a thermometer, and a reflux condenser, 35.6 parts by mass of 1,4-bis(3-acryloyloxy-2-hydroxypropoxy)butane (in the general formula (2), R¹ has 2 carbon atoms, R² has 4 carbon atoms, and R³ represents 2 atomic groups each having 2 carbon atoms and having a polymerizable unsaturated group), 0.007 part by mass of methylhydroquinone, and 0.07 part by mass of 2,6-tert-butyl-p-cresol were charged, and the temperature of the resultant mixture was adjusted to 50°C while stirring.

Then, 107.8 parts by mass of dicyclohexylmethane diisocyanate was fed into the four-necked flask, and the resultant mixture was subjected to reaction at 80°C for about 3 hours, and then to the resultant reaction mixture, 103.9 parts by mass of methyl ethyl ketone, 100 parts by mass of polyester polyol obtained by reacting 1,6-hexanediol, neopentyl glycol, and adipic acid (number average molecular weight: 2,000), 13.6 parts by mass of 2,2-dimethylolpropionic acid, and 10.2 parts by mass of 1,6-hexanediol were fed, and the resultant mixture was subjected to reaction at 80°C for about 3 hours.

Then, 74.1 parts by mass of methyl ethyl ketone was fed into the four-necked flask, followed by cooling to 50°C. The temperature of the resultant mixture was adjusted to 50°C while stirring. After cooling, 12.6 parts by mass of dipentaerythritol hexaacrylate and 10.2 parts by mass of triethylamine were fed to the mixture, and 663 parts by mass of ion-exchanged water was added dropwise to the resultant mixture.

Then, 31.9 parts by mass of a 10% by mass aqueous piperazine solution as a chain extender was fed into the four-necked flask, and the resultant mixture was subjected to reaction, and then subjected to desolvation under reduced pressure to obtain an aqueous urethane resin composition (2) having a nonvolatile content of 33% by mass.

### (Example 1: Preparation of ultraviolet curable composition (1))

303 parts by mass of the solution of aqueous urethane resin composition having a nonvolatile content of 33% by mass obtained in Synthesis Example 1 (corresponding to 100 parts by mass of the urethane resin (1)) and a 30% by mass photopolymerization initiator solution prepared from 9.3 parts by mass of N-methyl-2-pyrrolidone for 2-(dimethylamino)-1-(4-morpholinophenyl)-2-benzyl-1-butanone (hereinafter, referred to simply as "photopolymerization initiator (A)") and 4 parts by mass of a photopolymerization initiator (A) were mixed with each other to obtain an ultraviolet curable composition (1).

### (Example 2: Preparation of ultraviolet curable composition (2))

An ultraviolet curable composition (2) was obtained in the same manner as in Example 1 except that, instead of the photopolymerization initiator (A) used in Example 1, 2-(dimethylamino)-2-[(4-methylphenyl)methyl]-1-[4-(4-morpholinyl)phenyl]-1-butanone (hereinafter, referred to simply as "photopolymerization initiator (B)") was used.

### (Example 3: Preparation of ultraviolet curable composition (3))

An ultraviolet curable composition (3) was obtained in the same manner as in Example 1 except that, instead of the photopolymerization initiator (A) used in Example 1, 2,4,6-trimethylbenzoyl-diphenyl-phosphine oxide (hereinafter, referred to simply as "photopolymerization initiator (C)") was used.

### (Example 4: Preparation of ultraviolet curable composition (4))

An ultraviolet curable composition (4) was obtained in the same manner as in Example 1 except that, instead of the photopolymerization initiator (A) used in Example 1, bis(2,4,6-trimethylbenzoyl)phenylphosphine oxide (hereinafter, referred to simply as "photopolymerization initiator (D)") was used.

### (Example 5: Preparation of ultraviolet curable composition (5))

An ultraviolet curable composition (5) was obtained in the same manner as in Example 1 except that, instead of the photopolymerization initiator (A) used in Example 1, titanium bis(η5-2,4-cyclopentadien-1-yl)-bis(2,6-difluoro-3-(1H-pyrrol-1-yl)-phenyl) (hereinafter, referred to simply as "photopolymerization initiator (E)") was used.

### (Example 6: Preparation of ultraviolet curable composition (6))

An ultraviolet curable composition (6) was obtained in the same manner as in Example 1 except that, instead of the photopolymerization initiator (A) used in Example 1, 1,2-octanedione,1-[4-(phenylthio)-2-(O-benzoyloxime)] (hereinafter, referred to simply as "photopolymerization initiator (F)") was used.

### (Example 7: Preparation of ultraviolet curable composition (7))

An ultraviolet curable composition (7) was obtained in the same manner as in Example 1 except that, instead of the photopolymerization initiator (A) used in Example 1, O-acetyl-1-[6-(2-methylbenzoyl)-9-ethyl-9H-carbazol-3-yl]ethanoneoxime (hereinafter, referred to simply as "photopolymerization initiator (G)") was used.

### (Example 8: Preparation of ultraviolet curable composition (8))

303 Parts by mass of the solution of aqueous urethane resin composition having a nonvolatile content of 33% by mass obtained in Synthesis Example 2 (corresponding to 100 parts by mass of the urethane resin (2)) and a 30% by mass photopolymerization initiator solution prepared from 9.3 parts by mass of N-methyl-2-pyrrolidone for a photopolymerization initiator (D) and 4 parts by mass of a photopolymerization initiator (D) were mixed with each other to obtain an ultraviolet curable composition (8).

### (Comparative Example 1: Preparation of ultraviolet curable composition (C1))

303 Parts by mass of the solution of aqueous urethane resin composition having a nonvolatile content of 33% by mass obtained in Synthesis Example 1 (corresponding to 100 parts by mass of the urethane resin (1)) and a 30% by mass photopolymerization initiator solution prepared from 9.3 parts by mass of N-methyl-2-pyrrolidone for 1-hydroxycyclohexyl phenyl ketone (hereinafter, referred to simply as "photopolymerization initiator (H)"; absorption peak: around 240 nm) and 4 parts by mass of a photopolymerization initiator (H) were mixed with each other to obtain an ultraviolet curable composition (C1).

### (Comparative Example 2: Preparation of ultraviolet curable composition (C2))

An ultraviolet curable composition (C2) was obtained in the same manner as in Comparative Example 1 except that, instead of the photopolymerization initiator (H) used in Comparative Example 1, 1-[4-(2-hydroxyethoxy)-phenyl]-2-hydroxy-2-methyl-1-propan-1-one (hereinafter, referred to simply as "photopolymerization initiator (I)"; absorption peak: 270 nm) was used.

### (Comparative Example 3: Preparation of ultraviolet curable composition (C3))

An ultraviolet curable composition (C3) was obtained in the same manner as in Comparative Example 1 except that, instead of the photopolymerization initiator (H) used in Comparative Example 1, 2-methyl-1-(4-methylthiophenyl)-2-morpholinopropan-1-one (hereinafter, referred to simply as "photopolymerization initiator (J)"; absorption peak: 305 nm) was used.

### [Method for evaluating the elongation of a coating film]

An ultraviolet curable composition was applied to the surface of a release film so that the thickness of the resultant coating film became 50 µm. The applied composition was dried in an environment at 25°C for 24 hours, and then irradiated with an ultraviolet light (wavelength: 365 nm) at 0.5 J/cm² using an LED light emitter (manufactured by CCS Inc.) and the release film was removed to prepare a test film formed from the urethane resin (length: 40 mm; width: 5 mm).

Based on the results of the measurement made by a tensile test method (rate of pulling: 50 mm/minute), the elongation of the test film was evaluated in accordance with the following criteria.
A: After the tensile test, the test film was elongated in length by 50 to less than 100% as compared to the length of the test film before the tensile test.
B: After the tensile test, the test film was elongated in length by 30 to less than 50% as compared to the length of the test film before the tensile test.
C: After the tensile test, the test film was elongated in length by 10 to less than 30% as compared to the length of the test film before the tensile test.
D: After the tensile test, the test film was elongated in length by less than 10% as compared to the length of the test film before the tensile test.

### [Method for evaluating the hardness of a coating film]

An ultraviolet curable composition was applied to the surface of a glass substrate so that the thickness of the resultant coating film became 15 µm. The applied composition was dried at 140°C for 5 minutes, and then irradiated with an ultraviolet light (wavelength: 365 nm) at 0.5 J/cm² using an LED light emitter (manufactured by CCS Inc.) to obtain a test plate having a coating film stacked on the surface of the glass substrate.

With respect to the hardness of the coating film constituting the test plate, a hardness was measured by pressing a pencil against the surface of the coating film. The hardness was measured in accordance with a method described in the JIS test method (JIS K5600-5-4:1999) scratch hardness (pencil method).

### [Method for evaluating the degree of cure of a film]

An ultraviolet curable composition was applied to the surface of a release film so that the thickness of the resultant coating film became 150 µm. The applied composition was dried in an environment at 25°C for 24 hours, and then irradiated with an ultraviolet light (wavelength: 365 nm) at 0.5 J/cm² using an LED light emitter (manufactured by CCS Inc.) and the release film was removed to prepare a test film formed from the urethane resin (length: 40 mm; width: 5 mm).

With respect to the degree of cure of the test film, a hardness of each of the surface and back surface of the film placed on glass was measured in accordance with a method described in the JIS test method (JIS Z2244:2009) Vickers hardness test.

The formulations of the ultraviolet curable compositions (1) to (8) obtained in Examples 1 to 8 and the ultraviolet curable compositions (C1) to (C3) obtained in Comparative Examples 1 to 3 and the results of the above-mentioned evaluation are shown in Table 1. In Table 1, the formulation (amount) is indicated in terms of a nonvolatile content.

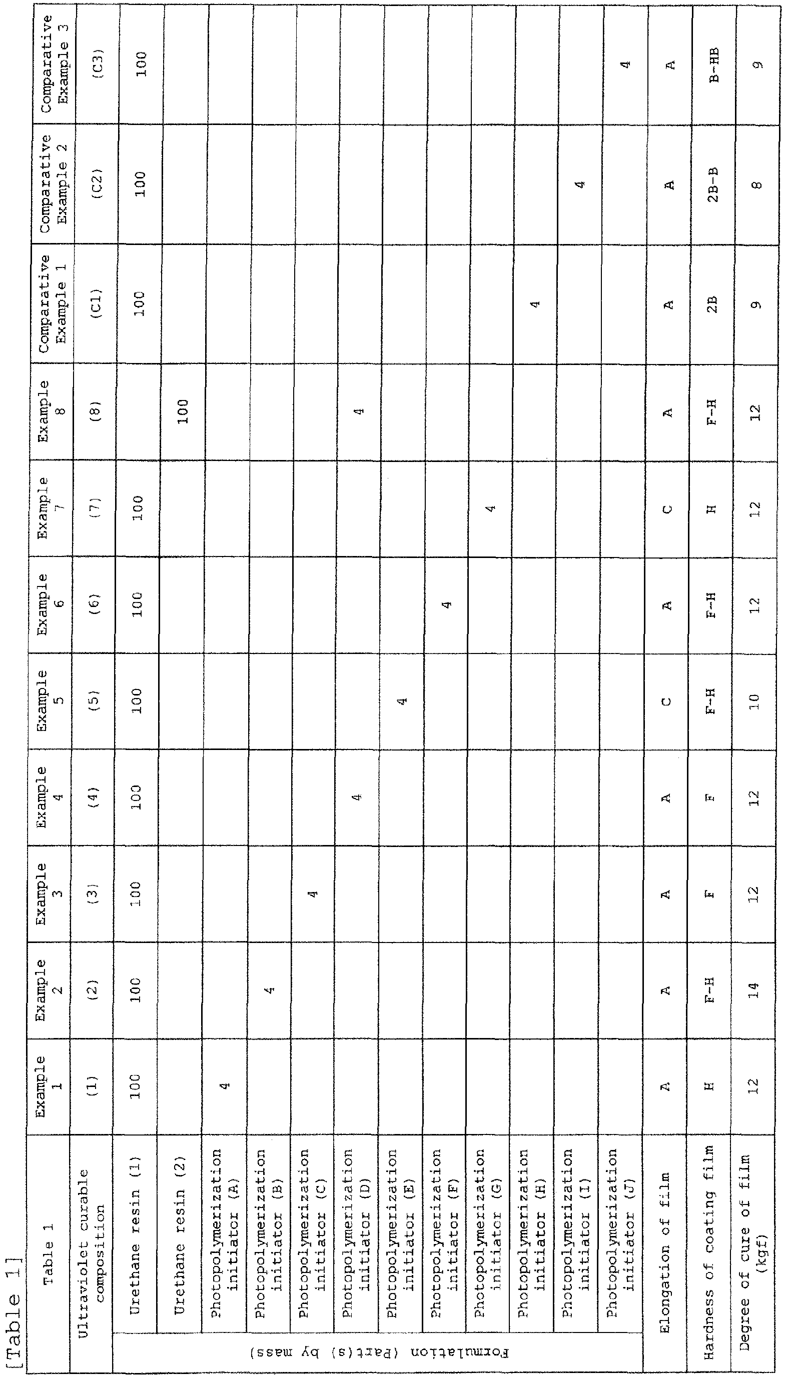

The results of evaluation in Examples 1 to 8 shown in Table 1 have confirmed that the ultraviolet curable composition of the present invention can be satisfactorily cured even when using an LED lamp as a light source, and that the cured coating film obtained from the composition has excellent elongation and excellent surface hardness.

On the other hand, Comparative Examples 1 to 3 are examples in which a photopolymerization initiator having an absorption peak which falls outside the range of from 320 to 460 nm is used. The results have confirmed that the coating films obtained in the Comparative Examples have markedly poor surface hardness, as compared to the cured coating film obtained from the ultraviolet curable composition of the present invention.

## Claims

1. An ultraviolet curable composition comprising:
(A) an urethane resin having a polymerizable unsaturated group, which is obtained by reacting a polyol (a1) and a polyisocyanate (a2) with each other, the polyol (a1) containing an alkylene diol (a1-1) having two or more polymerizable unsaturated groups, which is represented by the following general formula (1), or an oxyalkylene diol (a1-2) having two or more polymerizable unsaturated groups, which is represented by the following general formula (2);
(B) an aqueous medium; and
(C) a photopolymerization initiator having an absorption peak at a wavelength in the range of from 320 to 460 nm:
[Chem. 1]
**HO-R¹-OH** **(1)**
wherein, in the general formula (1), R¹ represents a structure having two or more atomic groups having a polymerizable unsaturated group in the side chain of a linear alkylene group having 1 to 9 carbon atoms,
[Chem. 2]
**HO-R¹O-R²-OR³-OH** **(2)**
wherein, in the general formula (2), R¹ and R³ each individually represent a structure having an atomic group having a polymerizable unsaturated group in the side chain of an ethylene group, and R² represents an alkylene group having 1 to 5 carbon atoms.

2. The ultraviolet curable composition according to claim 1, wherein the alkylene diol (al-1) is pentaerythritol diacrylate.

3. The ultraviolet curable composition according to claim 1, wherein the total amount of the alkylene diol (a1-1) and the oxyalkylene diol (a1-2) is in the range of from 0.1 to 49% by mass, based on the total mass of the raw materials used in producing the urethane resin (A).

4. The ultraviolet curable composition according to claim 1, wherein the polyol (a1) further contains a polyester polyol, a polyether polyol, or a polycarbonate polyol.

5. The ultraviolet curable composition according to claim 1, wherein the photopolymerization initiator (C) is at least one photopolymerization initiator selected from the group consisting of: 2-(dimethylamino)-1-(4-morpholinophenyl)-2-benzyl-1-butanone, 2-(dimethylamino)-2-[(4-methylphenyl)methyl]-1-[4-(4-morpholinyl)phenyl]-1-butanone, 2,4,6-trimethylbenzoyl-diphenyl-phosphine oxide, bis(2,4,6-trimethylbenzoyl)phenylphosphine oxide, titanium bis(η5-2,4-cyclopentadien-1-yl)-bis(2,6-difluoro-3-(1H-pyrrol-1-yl)-phenyl), 1,2-octanedione,1-[4-(phenylthio)-2-(O-benzoyloxime)], and O-acetyl-1-[6-(2-methylbenzoyl)-9-ethyl-9H-carbazol-3-yl]ethanoneoxime.

6. An article comprising a cured coating film obtained by irradiating the ultraviolet curable composition according to any one of claims 1 to 5 with a light from an LED lamp.

## Patentansprüche

1. Ultraviolett-härtbare Zusammensetzung, umfassend:
(A) ein Urethanharz mit einer polymerisierbaren ungesättigten Gruppe, das durch Umsetzen eines Polyols (a1) und eines Polyisocyanats (a2) miteinander erhalten wird, wobei das Polyol (a1) ein Alkylendiol (a1-1) mit zwei oder mehreren polymerisierbaren ungesättigten Gruppen, das durch die folgende allgemeine Formel (1) dargestellt ist, oder ein Oxyalkylendiol (a1-2) mit zwei oder mehreren polymerisierbaren ungesättigten Gruppen, das durch die folgende allgemeine Formel (2) dargestellt ist, enthält,
(B) ein wässriges Medium und
(C) einen Photopolymerisationsinitiator mit einem Absorptionspeak bei einer Wellenlänge im Bereich von 320 bis 460 nm:
[Chem. 1]
**HO-R¹-OH** **(1)**
wobei in der allgemeinen Formel (1) R¹ eine Struktur mit zwei oder mehreren Atomgruppen mit einer polymerisierbaren ungesättigten Gruppe in der Seitenkette einer linearen Alkylengruppe mit 1 bis 9 Kohlenstoffatomen darstellt,
[Chem. 2]
**HO-R¹O-R²-OR³-OH** **(2)**
wobei in der allgemeinen Formel (2) R¹ und R³ jeweils unabhängig eine Struktur mit einer Atomgruppe mit einer polymerisierbaren ungesättigten Gruppe in der Seitenkette einer Ethylengruppe darstellen und R² eine Alkylengruppe mit 1 bis 5 Kohlenstoffatomen darstellt.

2. Ultraviolett-härtbare Zusammensetzung gemäß Anspruch 1, wobei das Alkylendiol (a1-1) Pentaerythritdiacrylat ist.

3. Ultraviolett-härtbare Zusammensetzung gemäß Anspruch 1, wobei die Gesamtmenge des Alkylendiols (a1-1) und des Oxyalkylendiols (a1-2) im Bereich von 0,1 bis 49 Massen-%, basierend auf der Gesamtmasse der bei der Herstellung des Urethanharzes (A) verwendeten Rohmaterialien, liegt.

4. Ultraviolett-härtbare Zusammensetzung gemäß Anspruch 1, wobei das Polyol (a1) weiterhin ein Polyesterpolyol, ein Polyetherpolyol oder ein Polycarbonatpolyol enthält.

5. Ultraviolett-härtbare Zusammensetzung gemäß Anspruch 1, wobei der Photopolymerisationsinitiator (C) wenigstens ein Photopolymerisationsinitiator, ausgewählt aus der Gruppe, bestehend aus: 2-(Dimethylamino)-1-(4-morpholinophenyl)-2-benzyl-1-butanon, 2-(Dimethylamino)-2-[(4-methylphenyl)methyl]-1-[4-(4-morpholinyl)phenyl]-1-butanon, 2,4,6-Trimethylbenzoyldiphenylphosphinoxid, Bis(2,4,6-trimethylbenzoyl)phenylphosphinoxid, Titan-bis(η5-2,4-cyclopentadien-1-yl)-bis(2,6-difluor-3-(1H-pyrrol-1-yl)-phenyl), 1,2-Octandion,1-[4-(phenylthio)-2-(O-benzoyloxim)] und O-Acetyl-1-[6-(2-methylbenzoyl)-9-ethyl-9H-carbazol-3-yl]ethanonoxim, ist.

6. Artikel, der einen gehärteten Beschichtungsfilm, der durch Bestrahlen der Ultraviolett-härtbaren Zusammensetzung gemäß einem der Ansprüche 1 bis 5 mit einem Licht aus einer LED-Lampe erhalten wurde, umfasst.

## Revendications

1. Composition durcissable sous ultraviolet comprenant :
(A) une résine d'uréthane ayant un groupe insaturé polymérisable, qui est obtenue par la réaction d'un polyol (a1) et d'un polyisocyanate (a2) l'un avec l'autre, le polyol (a1) contenant un alkylène diol (a1-1) ayant deux ou plus de deux groupes insaturés polymérisables, qui est représenté par la formule générale (1) suivante, ou un oxyalkylène diol (a1-2) ayant deux ou plus de deux groupes insaturés polymérisables, qui est représenté par la formule générale (2) suivante ;
(B) un milieu aqueux ; et
(C) un initiateur de photopolymérisation ayant un pic d'absorption à une longueur d'onde située dans la plage allant de 320 à 460 nm :
[Chem. 1]
HO-R¹-OH (1)
dans laquelle, dans la formule générale (1), R¹ représente une structure ayant deux ou plus de deux groupes atomiques ayant un groupe insaturé polymérisable dans la chaîne latérale d'un groupe alkylène linéaire ayant 1 à 9 atomes de carbone,
[Chem. 2]
HO-R¹O-R²-OR³-OH (2)
dans laquelle, dans la formule générale (2), R¹ et R³ représentent chacun individuellement une structure ayant un groupe atomique ayant un groupe insaturé polymérisable dans la chaîne latérale d'un groupe éthylène, et R² représente un groupe alkylène ayant 1 à 5 atomes de carbone.

2. Composition durcissable sous ultraviolet selon la revendication 1, dans laquelle l'alkylène diol (a1-1) est le diacrylate de pentaérythritol.

3. Composition durcissable sous ultraviolet selon la revendication 1, dans laquelle la quantité totale de l'alkylène diol (a1-1) et de l'oxyalkylène diol (a1-2) est située dans la plage allant de 0,1 à 49 % en masse, sur la base de la masse totale des matières premières utilisées dans la production de la résine d'uréthane (A).

4. Composition durcissable sous ultraviolet selon la revendication 1, dans laquelle le polyol (a1) contient en outre un polyester polyol, un polyéther polyol, ou un polycarbonate polyol.

5. Composition durcissable sous ultraviolet selon la revendication 1, dans laquelle l'initiateur de photopolymérisation (C) est au moins un initiateur de photopolymérisation sélectionné dans le groupe consistant en : le 2-(diméthylamino)-1-(4-morpholinophényl)-2-benzyl-1-butanone, le 2-(diméthylamino)-2-[(4-méthylphényl)méthyl]-1-[4-(4-morpholinyl)phényl]-1-butanone, l'oxyde de 2,4,6-triméthylbenzoyl-diphényl-phosphine, l'oxyde de bis(2,4,6-triméthylbenzoyl)phényl-phosphine, le bis(η5-2,4-cyclopentadièn-1-yl)-bis(2,6-difluoro-3-(1H-pyrrol-1-yl)-phényle) de titane, la 1,2-octanedione, le 1-[4-(phénylthio)-2-(O-benzoyloxime)], et le O-acétyl-1-[6-(2-méthylbenzoyl)-9-éthyl-9H-carbazol-3-yl]éthanoneoxime.

6. Article comprenant un film de revêtement durci obtenu par l'irradiation de la composition durcissable sous ultraviolet selon l'une quelconque des revendications 1 à 5 avec une lumière provenant d'une lampe à DEL.
